# EUROPÄISCHE PATENTANMELDUNG

(11) **EP 0 925 864 A1**
(43) Veröffentlichungstag der Anmeldung: **30.06.1999**
(21) Anmeldenummer: 98120126.2
(22) Anmeldetag: 26.10.1998
(51) Int. Cl.: B23D 29/00, B23D 33/08

(54) **Blechschere**

(30) Priorität: 20.12.1997 DE 19757167
(71) Anmelder: C. & E. FEIN GmbH & Co., D-70176 Stuttgart (DE)
(72) Erfinder: Ziegler, Rolf, 72720 Sonnenbühl (DE)
(74) Vertreter: Gahlert, Stefan, Dr.-Ing.

(57) **Zusammenfassung**

Es wird eine Blechschere mit einem Gehäuse (11) angegeben, in dem ein motorisch angetriebener Stößeltrieb aufgenommen ist, der einen Stößel translatorisch hin und herbewegt, mit einem vom Gehäuse (11) quer abstehenden Schneidtisch (16) zur Führung der Blechschere anzuschneidendem Schnittgut, und mit einem Stößelmesser (24) am unteren, dem Schneidtisch (16) zugewandten Ende des Stößels, das mit einem am Schneidtisch (16) gehaltenen Schneidtischmesser (22) zum Schneiden des Schnittguts zusammenwirkt. Am Stößel ist ein seitlich abstehender Niederhalter (34) für das Schnittgut vorgesehen, der abgetrenntes Schnittgut in Richtung auf den Schneidtisch (16) beaufschlagt. Durch den Niederhalter wird ein spiralförmiges Aufwickeln des abgetrennten Schnittgutes vermieden und erreicht, daß das Schnittgut glatt aus der Schnittfläche herausläuft.

## Beschreibung

Die Erfindung betrifft eine Blechschere mit einem Gehäuse, in dem ein motorisch angetriebener Stößeltrieb aufgenommen ist, der einen Stößel translatorisch hin und herbewegt, mit einen vom Gehäuse abstehenden Schneidtisch zur Führung der Blechschere an zu schneidendem Schnittgut, und mit einem Stößelmesser am unteren, dem Schneidtisch zugewandten Ende des Stößels, das mit einem am Schneidtisch gehaltenen Schneidtischmesser zum Schneiden des Schnittguts zusammenwirkt.

Eine derartige Blechschere ist aus der DE-U-1 955 738 bekannt.

Die bekannte Blechschere weist ein Gehäuse mit einem im wesentlichen zylindrischen Motorgehäuseteil, in dem der Antriebsmotor aufgenommen ist, und ein sich etwa rechtwinklig dazu erstreckendes Getriebegehäuseteil auf, in dem ein Stößeltrieb zum Antrieb eines Stößelmessers aufgenommen ist, das mit einem gegenüberliegenden, an einem sogenannten Schneidtisch aufgenommenen, feststehenden Schneidtischmesser zusammenwirkt. Der etwa halbkreisförmig ausgebildete Schneidtisch dient zur Führung der Blechschere entlang von zu schneidendem Schnittgut und zur Halterung des Schneidtischmessers in einem geeigneten Abstand vom am Ende des Stößels aufgenommenen Stößelmesser.

Ein Nachteil einer derartigen Blechschere besteht darin, daß sich hinter dem feststehenden, am Schneidtisch gehaltenen Schneidmesser das abgetrennte Schnittgut insbesondere beim Besäumen von Werkstücken spiralförmig aufwickelt. Um die Unfallgefahr durch derartige scharfe Blechstreifen zu verringern, ist ein Schutzblech vorgesehen, das sich etwa parallel zum Maschinengehäuse mit Abstand von diesem erstreckt.

Beim Schneiden von dünnen Blechen ist ein derartiger Schutzschild meist ausreichend, um eine zuverlässige Funktion zu gewährleisten. Jedoch werden derartige Blechscheren auch für größere Blechstärken von bis zu etwa 2,5 mm verwendet. Beim Schneiden von derartig starken Blechen führen die sich spiralartig aufwickelnden Blechstreifen dazu, daß sich schon nach kurzer Zeit das Schnittgut am Schutzschild aufstaut, so daß der Schnitt unterbrochen werden muß und das Schnittgut zunächst etwa mit einem Hammer heruntergeklopft werden muß, bevor der Schnitt vorgesetzt werden kann.

Dies ist außerordentlich störend und bedeutet außerdem eine hohe Unfallgefahr.

Die Aufgabe der Erfindung besteht demnach darin, eine verbesserte Blechschere zu schaffen, mit der ein Aufrollen des Schnittgutes hinter der Schnittstelle weitgehend vermieden wird.

Diese Aufgabe wird erfindungsgemäß bei einer Blechschere gemäß der eingangs genannten Art dadurch gelöst, daß am Stößel ein seitlich abstehender Niederhalter für das Schnittgut vorgesehen ist, der abgetrenntes Schnittgut in Richtung auf den Schneidtisch beaufschlagt.

Die Aufgabe der Erfindung wird auf diese Weise vollkommen gelöst.

Durch den am Stößel befestigten Niederhalter wird bereits abgetrenntes Schnittgut hammerartig in Richtung auf den Schneidtisch beaufschlagt, also gewissermaßen in Richtung auf den Schneidtisch heruntergehämmert. Hierbei wird in vorteilhafter Weise der Stößel selbst, der zum Trennen des Bleches dient, auch zum Niederhalten bzw. Herunterhämmern des getrennten Bleches ausgenutzt.

Auf diese Weise wird mit einfachen Mitteln ein Aufrollen des Bleches hinter der Schnittstelle wirkungsvoll vermieden. Auf diese Weise wird die Unfallgefahr gegenüber herkömmlichen Blechscheren deutlich reduziert und eine Unterbrechung des Schnittvorgangs wegen sich am Schutzschild aufrollender Blechstreifen vermieden.

Gemäß einer Weiterbildung der Erfindung ist der Niederhalter einstückig mit dem Stößelmesser ausgebildet.

Auf diese Weise wird eine besonders einfache Ausführung und Montage ermöglicht.

Gemäß einer weiteren Ausführung der Erfindung ist der Niederhalter gemeinsam mit dem Stößelmesser am Stößel befestigt.

Auf diese Weise wird durch eine zweiteilige Ausführung von Stößelmesser und Niederhalter eine konstengünstige Ausführung des Niederhalters erreicht, da lediglich das Stößelmesser als Verschleißteil häufig ausgetauscht werden muß. Dabei wird die ohnehin notwendige Befestigungsmöglichkeit für das Stößelmesser mit der Befestigungsmöglichkeit für den Niederhalter gekoppelt, so daß eine besonders kostengünstige und einfache Befestigungsmöglichkeit erreicht wird.

In bevorzugter Weiterbildung dieser Ausführung ist der Niederhalter formschlüssig mit dem Stößelmesser verbunden.

Diese Maßnahme hat den Vorteil, daß die Lage des Niederhalters in Bezug auf das Stößelmesser sicher festgelegt werden kann.

Gemäß einer weiter bevorzugten Ausführung sind der Niederhalter und das Stößelmesser von einer Schraube durchsetzt, die mit dem Stößel verschraubt ist.

Auf diese Weise ist eine besonders einfache und schnell lösbare Befestigungsmöglichkeit sowohl für den Niederhalter als auch für das Stößelmesser geschaffen.

In zusätzlicher Weiterbildung der Erfindung ist der Niederhalter gegenüber dem Schneidtischmesser unter Wahrung eines Abstandes zu diesem angeordnet.

Durch eine derartige Anordnung des Niederhalters in Bezug auf das Schneidtischmesser wird die Funktion des Niederhalters unterstützt.

Gemäß einer weiteren Ausgestaltung der Erfindung weist der Niederhalter an seiner Außenfläche eine Nut auf, in die das Stößelmesser formschlüssig eingreift.

Durch diese Maßnahme läßt sich eine formschlüssige Festlegung des Niederhalters am Stößelmesser auf besonders einfache Weise erreichen.

Gemäß einer weiteren Ausgestaltung der Erfindung weist der Niederhalter eine dem Schnittgut zugewandte Stirnfläche mit einem in Schnittrichtung gesehenen vorderen Abschnitt und einem hinteren Abschnitt auf, der gegenüber dem vorderen Abschnitt abgewinkelt ist, wobei abgetrenntes Schnittgut vom hinteren Abschnitt in Richtung auf den Schneidtisch beaufschlagt wird.

Auf diese Weise wird es vermieden, daß der Niederhalter auf das Schnittgut hämmert, bevor dieses abgetrennt ist.

In einer alternativen Ausführung weist der Niederhalter eine dem Schnittgut zugewandte ebene Stirnfläche auf, die derart geneigt ist, daß das vordere, in Schnittrichtung weisende Ende weiter vom Schnittgut entfernt ist, als das gegenüberliegende hintere Ende.

Auch auf diese Weise wird es vermieden, daß der Niederhalter auf das Schnittgut einwirkt, bevor dieses abgetrennt ist.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine teilweise geschnittene Seiten-Teilansicht einer erfindungsgemäßen Blechschere im Bereich des Schneidtisches und des Getriebegehäuses, in dem der Stößeltrieb aufgenommen ist;
- Fig. 2: eine teilweise geschnittene Vorder-Teilansicht der Blechschere gemäß Fig. 1;
- Fig. 3: eine Seitenansicht des Niederhalters gemäß den Fig. 1 und 2;
- Fig. 4: einen Längsschnitt durch den Niederhalter gemäß Fig. 3;
- Fig. 5: eine Seitenansicht eines Niederhalters in einer leicht gegenüber den Ausführungen gemäß Fig. 3 und 4 abgewandelten Ausführung und
- Fig. 6: einen Längsschnitt durch den Niederhalter gemäß Fig. 5.

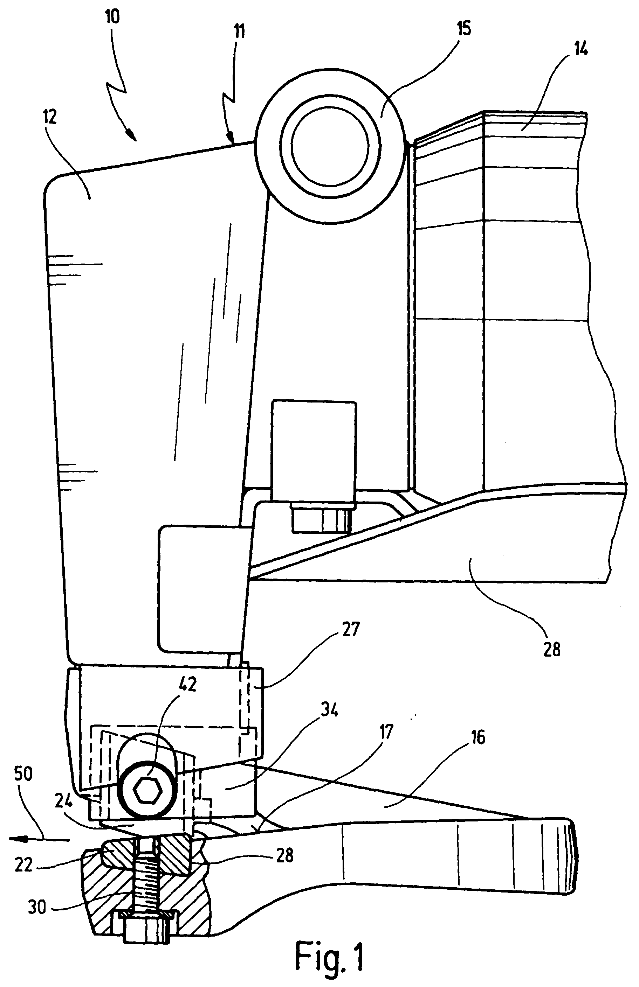

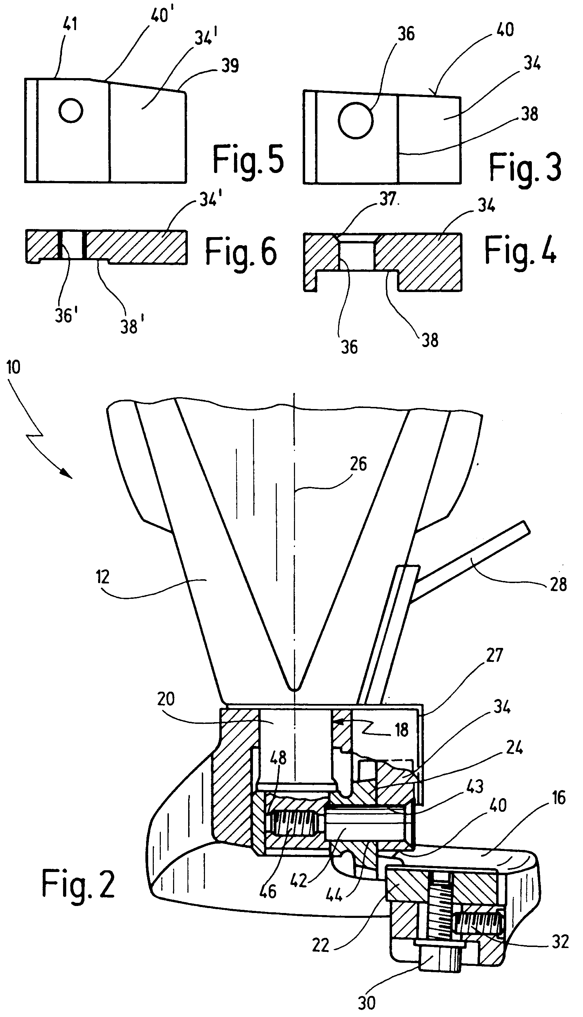

Eine erfindungsgemäße Blechschere ist in den Fig. 1 und 2 insgesamt mit der Ziffer 10 bezeichnet.

Die Blechschere 10 weist ein insgesamt mit der Ziffer 11 bezeichnetes Gehäuse auf, das aus einem Motorgehäuse 14 im wesentlichen zylindrischer Form, in dem ein Elektromotor aufgenommen ist, und einem an das Motorgehäuse 14 angeflanschten Getriebegehäuse 12 besteht, in dem ein Stößeltrieb 18 zum Antrieb eines Stößels 20 aufgenommen ist (vergleiche Fig. 2).

Am unteren Ende des Getriebegehäuses 12 ist ein Schneidtisch 16 angeformt, der etwa halbkreisförmig ausgebildet ist und sich vom unteren Ende des Getriebegehäuses 12 aus schraubenartig nach unten erstreckt, um so einen Zwischenraum zu bilden, durch ein zu schneidendes Schnittgut, also etwa ein Blech geführt werden kann.

Die Blechschere arbeitet nach dem Prinzip einer Schlagschere, indem ein am unteren Ende des Stößels 20 starr befestigtes Stößelmesser 24 durch den Stößel 20 nach unten bewegt wird und mit einem am unteren Ende des Schneidtisches 16 starr befestigten, feststehenden Schneidtischmesser 22 zusammenwirkt.

Der Stößeltrieb 18 ist herkömmlicher Bauart und kann beispielsweise als Exzentertrieb gemäß der aus der DE-U-1 955 738 bekannten Art ausgeführt sein.

Die Anordnung des Schneidtisches 16 ist so getroffen, daß die sich zwischen dem Schneidtischmesser 22 und dem Stößelmesser 24 ergebende Schnittebene gegenüber der Längsachse 26 des Stößeltriebs 18 seitlich versetzt ist, so daß der Schnittvorgang gut von oben betrachtet werden kann und die Sicht nicht durch das Getriebegehäuse 12 oder das Motorgehäuse 14 behindert wird.

Am Getriebegehäuse 12 ist ein Schutzschild 28 angeschraubt, der sich ausgehend vom Getriebegehäuse 12 etwa parallel zum Motorgehäuse 14 unter Wahrung eines Abstandes zu diesem seitlich schräg nach oben erstreckt. Dieser Schutzschild 28 dient als Handschutz, ist jedoch infolge der Verwendung eines Niederhalters gemäß der Erfindung nicht mehr unbedingt erforderlich.

Während eines Schnittes wird die Blechschere in der Regel an einem seitlich vom Gehäuse 11 aus abstehenden Handgriff 15 und am Motorgehäuse 14 oder auch an einem speziell am Ende des Motorgehäuses vorgesehenen Handgriff, der mit einem Schalter gekoppelt sein kann, mit zwei Händen gehalten.

Das Schneidtischmesser 22 ist in einer entsprechend geformten Ausnehmung 28 des Schneidtisches 16 mittels einer Schraube 30 befestigt und kann in Richtung auf das Stößelmesser 24 durch eine quer zur Schraube 30 angreifende Madenschraube 32 eingestellt werden.

Am Stößelmesser 24 ist ein Niederhalter 34 befestigt, der sich vom Stößelmesser 24 aus in Richtung auf das Schneidtischmesser 22 unter Wahrung eines Abstandes zu diesem erstreckt.

Die Form des Niederhalters 16 ist im einzelnen aus den Fig. 3 und 4 ersichtlich.

Der Niederhalter 34 weist eine im wesentlichen quadratische Grundform auf und besitzt an einer Außenfläche einen Nut 38, mit dem der Niederhalter 34 formschlüssig über das in Richtung zum Schneidtischmesser 22 hin vorstehende Ende des Stößelmessers 24 geschoben ist, und somit formschlüssig gegen Verdrehen gesichert mit dem Stößelmesser 24 verbunden ist. Zur Festlegung am Stößel 20 dient eine Schraube 42, die eine Öffnung 36 des Niederhalters 34 und eine damit fluchtende Öffnung 44 des Stößelmessers 24 durchsetzt und mit einem Gewindeabschnitt 46 in ein Gewinde 48 eingeschraubt ist, das sich im unteren Ende des Stößels 20 in einer Richtung quer zur Längsachse 26 des Stößeltriebs erstreckt.

Der Niederhalter 34 und das Stößelmesser 24 sind mit ihren Öffnungen 36 bzw. 44 an einem bolzenförmigen Abschnitt 43 der Schraube 42 zentriert, die in einer Ansenkung 37 am Niederhalter 34 bündig aufgenommen ist (Fig. 4).

Insgesamt ergibt sich so eine sichere Festlegung des Stößelmessers 24 und des Niederhalters 34 am Stößel 20, die den schlagartigen Beanspruchungen während des Blechschneidens gewachsen ist.

Der Niederhalter 34 weist eine der Oberseite des Schneidtischmessers 22 zugewandte Stirnfläche 40 auf, die - wie aus Fig. 1 und 3 zu ersehen ist, in Bezug auf die Oberfläche des Schneidtisches 16, über die das Schnittgut geführt wird, leicht geneigt angeordnet ist.

Die Neigung im Verhältnis zur dem Schnittgut zugewandten Oberfläche 17 des Schneidtisches 16 ist derart gewählt, daß die ebene Stirnfläche 40 am in Schnittrichtung 50 gesehen vorderen Ende etwas weiter von der Oberfläche 17 des Schneidtisches 16 entfernt ist als am in Schneidrichtung 50 gesehen hinteren Ende des Niederhalters 34.

Auf diese Weise wird sichergestellt, daß der Niederhalter 34 nicht auf das Schnittgut einhämmert, bevor dieses zwischen den beiden Schneidmessern 22, 24 getrennt wird.

Dagegen wird durch den in Schnittrichtung 50 gesehen hinteren Bereich des Niederhalters 34 gewährleistet, daß das Schnittgut, das sich normalerweise ohne einen derartigen Niederhalter nach oben hin in Richtung auf das Motorgehäuse 14 aufrollen würde, in Richtung auf den Schneidtisch 16 beaufschlagt und sozusagen heruntergehämmert wird.

Auf diese Weise wird die plastische Verformung des Schnittgutes, die sich infolge der Trennung des Schnittgutes zwischen den beiden Messern 22, 24 ergibt, durch den Niederhalter 34 wieder rückgängig gemacht wird, so daß das Schnittgut auf der Oberfläche 17 des Schneidtisches 16 geführt weiterläuft. Diese Wirkung ergibt sich selbst beim Besäumen von dicken Blechen. Auf diese Weise wird eine Unfallgefahr durch sich spiralförmig aufwickelndes, scharfkantiges Blech vermieden und außerdem eine Unterbrechung des Schnittes vermieden, die bisher bei herkömmlichen Blechscheren notwendig war, um das aufgerollte Schnittgut in der Regel unter Zuhilfenahme eine Hammers herunterzuschlagen.

Das Stößelmesser 24 und der Niederhalter 34 bzw. 34' sind zusätzlich noch von einer Abdeckkappe 27 umschlossen, wie aus den Fig. 1 und 2 ersichtlich ist. Diese Abdeckkappe 27 dient lediglich als zusätzlicher Schutz, der ein Berühren zwischen Niederhalter 34 und Getriebegehäuse 12 vermeiden soll und gleichzeitig das Eindringen von Schmutz vermeiden hilft.

In den Fig. 5 und 6 ist eine alternative Ausführungsform des Niederhalters dargestellt und insgesamt mit der Ziffer 34' bezeichnet.

Der Niederhalter 34' entspricht im wesentlichen dem zuvor anhand der Fig. 3 und 4 beschriebenen Niederhalter, weist jedoch zur Befestigung am Stößelmesser 24 ein Gewinde 36' auf, durch das die entsprechend abgewandelte Schraube zur gemeinsamen Befestigung mit dem Stößelmesser 24 am unteren Ende des Stößels 20 eingeschraubt werden kann. Die Nut 38' zur Verbindung mit dem Stößelmesser 24 ist etwas flacher als die Nut 38 gemäß Fig. 4, gewährleistet jedoch wiederum eine formschlüssige Verbindung mit dem Stößelmesser 24.

Die dem Schnittgut zugewandte Stirnfläche 40' des Niederhalters 34' weist in Schnittrichtung 50 gesehen einen vorderen Abschnitt 41 und einen hinteren Abschnitt 39 auf, der gegenüber dem vorderen Abschnitt 41 leicht abgewinkelt ist.

Dabei ist die Anordnung so getroffen, daß lediglich bereits abgetrenntes Schnittgut vom hinteren Abschnitt 39 berührt wird, während der vordere Abschnitt 41 derart abgewinkelt ist, daß das Schnittgut vor dem Abtrennen zwischen den beiden Messern 22, 24 nicht berührt wird.

## Patentansprüche

1. Blechschere mit einem Gehäuse (11), in dem ein motorisch angetriebener Stößeltrieb (18) aufgenommen ist, der einen Stößel (20) translatorisch hin und her bewegt, mit einem vom Gehäuse (11) quer abstehenden Schneidtisch (16) zur Führung der Blechschere (10) an zu schneidendem Schnittgut, und mit einem Stößelmesser (24) am unteren, dem Schneidtisch (16) zugewandten Ende des Stößels (20), das mit einem am Schneidtisch (16) gehaltenen Schneidtischmesser (22) zum Schneiden des Schnittguts zusammenwirkt, dadurch gekennzeichnet, daß am Stößel (20) ein seitlich abstehender Niederhalter (34, 34') für das Schnittgut vorgesehen ist, der abgetrenntes Schnittgut in Richtung auf den Schneidtisch (16) beaufschlagt.

2. Blechschere nach Anspruch 1, dadurch gekennzeichnet, daß der Niederhalter einstückig mit dem Stößelmesser (24) ausgebildet ist.

3. Blechschere nach Anspruch 1, dadurch gekennzeichnet, daß der Niederhalter (34, 34') gemeinsam mit dem Stößelmesser (24) am Stößel (20) befestigt ist.

4. Blechschere nach Anspruch 3, dadurch gekennzeichnet, daß der Niederhalter (34, 34') formschlüssig mit dem Stößelmesser (24) verbunden ist.

5. Blechschere nach Anspruch 3 oder 4, dadurch gekennzeichnet, daß der Niederhalter (34, 34') und das Stößelmesser (24) von einer Schraube (42) durchsetzt sind, die mit dem Stößel (20) verschraubt ist.

6. Blechschere nach einem der vorhergehenden Ansprüche, dadurch gekennzeichnet, daß der Niederhalter (34, 34') gegenüber dem Schneidtischmesser (22) unter Wahrung eines Abstandes zu diesem angeordnet ist.

7. Blechschere nach einem der vorhergehenden Ansprüche, dadurch gekennzeichnet, daß der Niederhalter (34, 34') an einer Außenfläche eine Nut (38, 38') aufweist, in die das Stößelmesser (24) formschlüssig eingreift.

8. Blechschere nach einem der vorhergehenden Ansprüche, dadurch gekennzeichnet, daß der Niederhalter (34') eine dem Schnittgut zugewandte Stirnfläche (40') mit einem in Schnittrichtung (50) gesehen vorderen Abschnitt (41) und einem hinteren Abschnitt (39) aufweist, der gegenüber dem vorderen Abschnitt (41) abgewinkelt ist, wobei abgetrenntes Schnittgut vom hinteren Abschnitt (39) in Richtung auf den Schneidtisch (16) beaufschlagt wird.

9. Blechschere nach einem der Ansprüche 1-7, dadurch gekennzeichnet, daß der Niederhalter (34) eine dem Schnittgut zugewandte ebene Stirnfläche (40) aufweist, die derart geneigt ist, daß das vordere, in Schnittrichtung weisende Ende weiter vom Schnittgut entfernt ist als das gegenüberliegende hintere Ende.
